# EUROPÄISCHE PATENTSCHRIFT

(11) **EP 1 658 660 B1**
(45) Veröffentlichungstag und Bekanntmachung des Hinweises auf die Patenterteilung: **10.10.2007**
(21) Anmeldenummer: 04764006.5
(22) Anmeldetag: 12.08.2004
(51) Int. Cl.: H01R 12/18, H01R 9/24

(54) **VERTEILERANSCHLUSSMODUL**
DISTRIBUTION CONNECTING MODULE
MODULE DE RACCORDEMENT DE DISTRIBUTION

(30) Priorität: 29.08.2003 DE 10339844
(43) Veröffentlichungstag der Anmeldung: 24.05.2006
(73) Patentinhaber: ADC GMBH, 14167 Berlin (DE)
(72) Erfinder: BUSSE, Ralf, Dieter, 12625 Waldesruh (DE); STARK, Joachim, 13593 Berlin (DE); KLEIN, Harald, 10318 Berlin (DE); NIJHUIS, Antony, 64397 Modautal-Brandau (DE)
(86) Internationale Anmeldenummer: PCT/EP2004/009002
(87) Internationale Veröffentlichungsnummer: WO 2005/029647

(56) Entgegenhaltungen:
- EP-A- 0 661 777
- EP-A- 0 671 856
- WO-A-01/97339
- DE-U- 20 120 690
- US-A- 3 662 321
- US-A- 4 566 660

## Beschreibung

Die Erfindung betrifft ein Verteileranschlussmodul gemäß dem Oberbegriff des Patentanspruchs 1.

Derartige Verteileranschlussmodule für die Telekommunikations- und Datentechnik werden beispielsweise in Hauptverteilern oder Kollokationsverteilem eingesetzt und dienen zum Anschließen und Rangieren von ankommenden und abgehenden Kabeladern.

Aus der DE 100 29 649 A1 ist ein Verteileranschlussmodul für die Telekommunikations- und Datentechnik bekannt, umfassend ein Gehäuse, in dem von außen zugänglich Eingangs- und Ausgangskontakte zum Anschließen von Leitungen oder Adern angeordnet sind, wobei das Gehäuse mit einem Hohlraum ausgebildet ist, in dem Funktionselemente zwischen den Eingangs- und Ausgangskontakten angeordnet sind. Die Eingangs- und Ausgangskontakte sind an gegenüberliegenden Stirnseiten des Gehäuses angeordnet. Die Funktionselemente sind auf mindestens einer Leiterplatte angeordnet, die in dem Gehäuse abgestützt ist. Die Eingangskontakte sind als Schneid-Klemm-Kontakte ausgebildet, wobei die Ausgangskontakte ebenfalls als Schneid-Klemm-Kontakte oder als elektrischer Steckverbinder ausgebildet sind. Die Schneid-Klemm-Kontakte sind vorzugsweise mit einem gabelförmigen Kontakt ausgebildet, mittels dessen eine kraftschlüssige elektrische Verbindung zu den Funktionselementen herstellbar ist. Dabei wird bereits vorgeschlagen, defekte Leiterplatten auszutauschen, in dem die gabelförmigen Kontakte von der Leiterplatte abgezogen werden. Nachteilig an der bekannten Ausführungsform ist, dass dieser Abziehvorgang recht schwierig ist, da die gabelförmigen Kontakte kraftschlüssig mit der Leiterplatte verbunden sind.
Des Weiteren müssen die Adern beim Abziehen entfernt werden und nach dem Wechsel wieder neu angeschaltet werden.

Aus der WO 01/97 339 A1 ist ein gattungsgemäßes Verteileranschlussmodul für die Telekommunikations- und Datentechnik bekannt, umfassend ein Gehäuse, in dem von außen zugänglich Eingangs- und Ausgangskontakte zum Anschließen von Leitungen und Adern angeordnet sind, wobei das Gehäuse mit einem Hohlraum ausgebildet ist, in dem mindestens eine Leiterplatte angeordnet ist, wobei die Eingangskontakte als mindestens eine Anschlussleiste mit Schneid-Klemm-Kontakten ausgebildet ist, wobei die Eingangs- und Ausgangskontakte lösbar mit der Leiterplatte verbunden sind, wobei die die Eingangskontakte tragende Anschlussleiste über ein Frontteil mit dem Gehäuse lösbar verbindbar ist, wobei die Schneid-Klemm-Kontakte über Gabelkontakte mit der Leiterplatte verbunden sind und die Verbindung zwischen Frontteil und Gehäuse derart ausgebildet ist, dass beim Lösen der Verbindung die mit dem Frontteil verbundene Anschlussleiste mit den Gabelkontakten von der Leiterplatte wegbewegt wird. Dabei ist das Frontteil mit dem Gehäuse verrastet.

Aus der DE 201 20 690 U1 ist eine Reihenklemme mit Leiterplatte bekannt, umfassend ein anreihbares Klemmengehäuse aus Isolierstoff, im Klemmengehäuse angeordnete Anschlussvorrichtungen zum Anschluss externer Leitungen, im Klemmengehäuse angeordnete Stromschienen mit daran ausgebildeten oder angesetzten Anschlüssen zur Kontaktierung von korrespondierenden Anschlüssen der Leiterplatte, wobei das Klemmengehäuse eine Aussparung zur Aufnahme der Leiterplatte aufweist, welche eine der Kontur der Leiterplatte angepasste Form aufweist und die Anschlüsse an den Stromschienen und die Anschlüsse an der Leiterplatte zusammensteckbar ausgebildet sind. An den Stromschienen sind gabelartige Klemmkontakte zur Kontaktierung der Kontaktbereiche an der Leiterplatte angeordnet, die die Leiterplatte in deren Randbereichen beidseitig einfassen.

Aus der EP 0 661 777 A1 und der US-3,662,321 sind Anschlussmodule bekannt, wo Teile über Schraubverbindungen miteinander befestigt werden.

Aus der US-4,566,660 ist eine steckbare Kabelführung bekannt.

Der Erfindung liegt daher das technische Problem zugrunde, ein Verteileranschlussmodul für die Telekommunikations- und Datentechnik zu schaffen, mittels dessen Leiterplatten einfacher auswechselbar sind.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu sind die Eingangs- und Ausgangskontakte lösbar mit der Leiterplatte verbunden, wobei die die Eingangskontakte tragende Anschlussleiste über ein Frontteil mit dem Gehäuse lösbar verbunden ist, wobei die Schneid-Klemm-Kontakte über Gabelkontakte mit der Leiterplatte verbunden sind und die Verbindung zwischen Frontteil und Gehäuse derart ausgebildet ist, dass beim Lösen der Verbindung die mit dem Frontteil verbundene Anschlussleiste mit den Gabelkontakten von der Leiterplatte wegbewegt wird. Hierdurch wird die notwendige Kraft zum Herstellen bzw. Lösen der kraftschlüssigen Verbindung zwischen Leiterplatte und den Gabelkontakten durch die Verbindung zwischen Frontteil und Gehäuse aufgebracht. Diese Verbindung kann jedoch je nach Ausführungsform sehr leicht durch Werkzeuge hergestellt bzw. gelöst werden. Ein weiterer Vorteil ist, dass bei einer symmetrischen Verbindung zwischen Frontteil und Gehäuse auch die Kraftübertragung auf die Anschlussleiste symmetrisch und gleichmäßig erfolgt. Durch die nun sehr einfache Handhabung der Austauschbarkeit der Leiterplatte kann das Verteileranschlussmodul universell eingesetzt werden und erlaubt beliebige Wechsel bzw. Erweiterungen von Anwendungen. So ist es möglich, das Modul einmal als Splitter zum Trennen des Sprach- und Datendienstes für ADSL-Anwendungen einzusetzen und diese bedarfsweise auszutauschen, falls der Kunde später eine VDSL-Anwendung wünscht. Ebenso kann die Leiterplatte durch ein geeignetes Layout für SDSL oder reine Sprachanwendungen umgestaltet werden. Ebenso kann einfach durch Austausch der Leiterplatte beispielsweise ein Überspannungsschutz integriert werden.

Dabei ist das Gehäuse mit einem Anschlag ausgebildet, wobei die Leiterplatte im eingesetzten Zustand mit ihrer den Eingangskontakten zugeordneten Stirnseite hinter dem Anschlag liegt. Damit wird verhindert, dass die Leiterplatte selbst beim Lösen der Verbindung aus dem Gehäuse herausbewegt wird. Diese ist durch den Anschlag fixiert, wobei der Anschlag auch die notwendigen Gegenkräfte beim Lösen der Gabelkontakte aufnimmt. Zum Entfernen der Leiterplatte muss diese dann leicht angehoben und herausgezogen werden.

In einer weiteren Ausführungsform umfasst die Verbindung zwischen Frontteil und Gehäuse mindestens eine dem Frontteil zugeordnete Schraube und ein dem Gehäuse zugeordnetes Gewinde, wobei die Schraube zum Frontteil fixiert ist. Vorzugsweise sind dabei zwei Schrauben dem Frontteil zugeordnet, um die bereits zuvor beschriebene Symmetrie zu erreichen. Durch die Fixierung der Schraube zum Frontteil wird bei einer Schraubbewegung der Schraube das Frontteil und damit die verbundene Anschlussleiste bewegt.

In einer weiteren bevorzugten Ausführungsform ist die Schraube über eine Nut zwischen Schraubenkopf und Gewinde zum Frontteil fixiert, wobei die Schraube dabei vorzugsweise verliersicher mit dem Frontteil verbunden ist. Hierzu wird die Schraube in eine Öffnung des Frontteils gesteckt und mit der Nut in einen verengten Bereich geschoben. Anschließend wird die Anschlussleiste durch die Öffnung gesteckt und mit dem Frontteil verrastet.

In einer weiteren bevorzugten Ausführungsform weisen die Seitenwände Führungsschlitze zum Abstützen der Leiterplatte auf, wobei eine Kante des Führungsschlitzes schräg ausgebildet ist. Dabei muss die Leiterplatte beim Ein- und Herausschieben schräg gehalten werden, damit diese über den Anschlag geführt werden kann.

In einer weiteren bevorzugten Ausführungsform ist das Gehäuse aus Metall ausgebildet. Dies bewirkt neben einer HF-Schirmung bedarfsweise eine einfache Herstellung von Erdverbindungen.

In einer weiteren bevorzugten Ausführungsform sind das Bodenteil und der Deckel des Gehäuses als separate Teile ausgebildet, die mit den Seitenwänden verbindbar ausgebildet sind, wobei die Verbindung vorzugsweise als Schraubverbindung ausgebildet ist.

In einer weiteren bevorzugten Ausführungsform sind der Deckel und/oder das Bodenteil aus einem Federstahlblech ausgebildet, wobei an diesem Profil-Gabeln angeordnet sind, mittels derer das Verteileranschlussmodul auf Profilstangen aufrastbar ist. Bei dieser Ausführungsform sind der Deckel und/oder das Bodenteil mindestens im Bereich der Profil-Gabeln mit den Seitenwänden verschraubt.

In einer weiteren bevorzugten Ausführungsform sind am Gehäuse Federkontakte angeordnet, die mit der Leiterplatte verbunden sind und einen Erdkontakt herstellen.

In einer weiteren bevorzugten Ausführungsform sind die unteren und oberen Profil-Gabeln aus einem separaten Blechteil ausgeformt, das vorzugsweise mit den Seitenwänden des Gehäuses verschraubt ist.

Vorzugsweise sind dann auch die Federkontakte zum Herstellen einer Erdverbindung für die Leiterplatte an dem Blechteil angeordnet.

In einer weiteren bevorzugten Ausführungsform ist die Gehäuserückwand lösbar mit dem Gehäuse verbunden. Diese Ausführungsform kommt vorzugsweise zur Anwendung, wenn vorbeschaltete Anschlussleisten auf der Rückseite verbaut werden sollen. Eine alternative Möglichkeit besteht darin, die Gehäuserückwand mit seitlichen Schlitzen auszubilden, so dass die Anschlussleisten bzw. Steckverbinder seitlich eingeschoben und verrastet werden. Werden mehrere derartige Schlitze benötigt, so werden diese vorzugsweise abwechselnd links und rechts an der Gehäuserückwand eingebracht, um deren mechanische Stabilität so wenig wie möglich zu beeinträchtigen.

In einer bevorzugten Ausführungsform sind in die Seitenwände des Gehäuses Kabelführungen steckbar.

In einer weiteren bevorzugten Ausführungsform sind jedem Frontteil zwei Anschlussleisten zugeordnet und an der gegenüberliegenden Stirnseite eine Anschlussleiste oder ein Steckverbinder angeordnet. Diese Ausführungsform kommt vorzugsweise für DSL-Anwendungen in Hauptverteilern zur Anwendung. Dabei ist die erste Anschlussleiste im Frontteil den POTS-Teilnehmerkarten und die zweite Anschlussleiste im Frontteil dem Teilnehmer zugeordnet, wobei die Anschlussleiste bzw. der Steckverbinder mit dem Dienstanbieter verbunden ist.

In einer weiteren bevorzugten Ausführungsform sind die Kontaktelemente der Anschlussleiste derart mechanisch in der Anschlussleiste abgestützt, dass die Anschlussleiste vorab mit Adern außerhalb des Verteileranschlussmoduls beschaltbar sind. Hierdurch ist es auch möglich, die vollbeschaltete Anschlussleiste von der Leiterplatte zu trennen und die Leiterplatte auszutauschen, ohne die Adern neu zu beschalten.

Durch die Erfindung wird es nunmehr möglich, die Leiterplatten ohne Unterbrechung des Telefoniedienstes auszutauschen. Hierzu werden über einen Kurzschlussbügel jeweils ein Kontakt der ersten Anschlussleiste mit einem Kontakt der zweiten Anschlussleiste kurzgeschlossen. Anschließend können dann die vollbeschalteten Anschlussleisten durch Lösen des Frontteils von der Leiterplatte abgezogen werden, ohne den Telefoniedienst zu unterbrechen.

Die Erfindung wird nachfolgend anhand eines bevorzugten Ausführungsbeispiels näher erläutert. Die Fig. zeigen:
- Fig. 1: eine perspektivische Rückansicht eines Verteileranschlussmoduls,
- Fig. 2: eine perspektivische Vorderansicht des Verteileranschlussmoduls ohne Deckel,
- Fig. 3: ein Frontteil mit zwei eingesetzten Anschlussleisten und Schrauben,
- Fig. 4: das Frontteil ohne Anschlussleisten und Schrauben,
- Fig. 5: eine perspektivische Darstellung einer Schraube,
- Fig. 6: eine perspektivische Darstellung eines Gehäuses ohne Deckel und Bodenteil,
- Fig. 7: eine Seitenansicht auf die Gehäuseseitenwand,
- Fig. 8: eine Detaildarstellung im Bereich des Gewindes zur Aufnahme der Schraube,
- Fig. 9: eine perspektivische Darstellung eines Blechteils mit unteren und oberen Profil-Gabeln und Federkontakten,
- Fig. 10: eine perspektivische Explosionsdarstellung einer Anschlussleiste für Leiterplatten,
- Fig. 11: einen Querschnitt durch die zusammengesetzte Anschlussleiste und
- Fig. 12: eine perspektivische Rückansicht der Anschlussleiste.

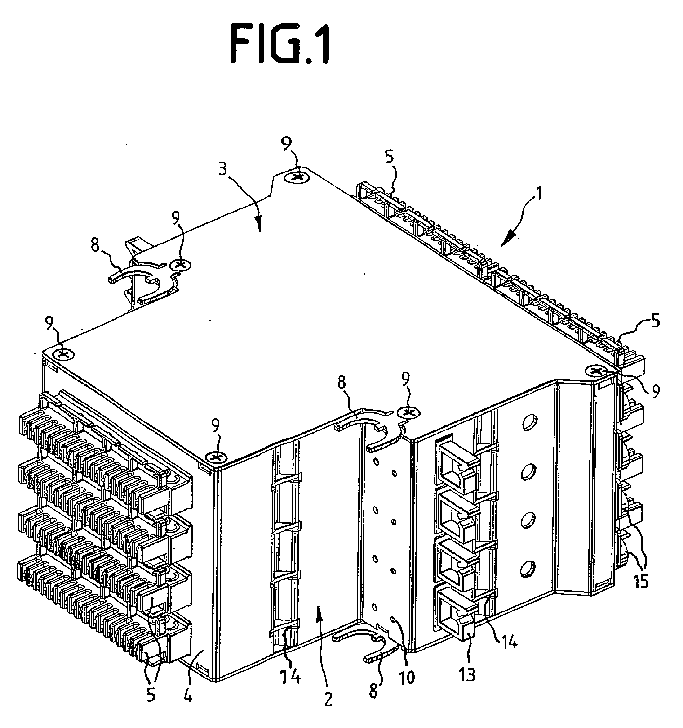

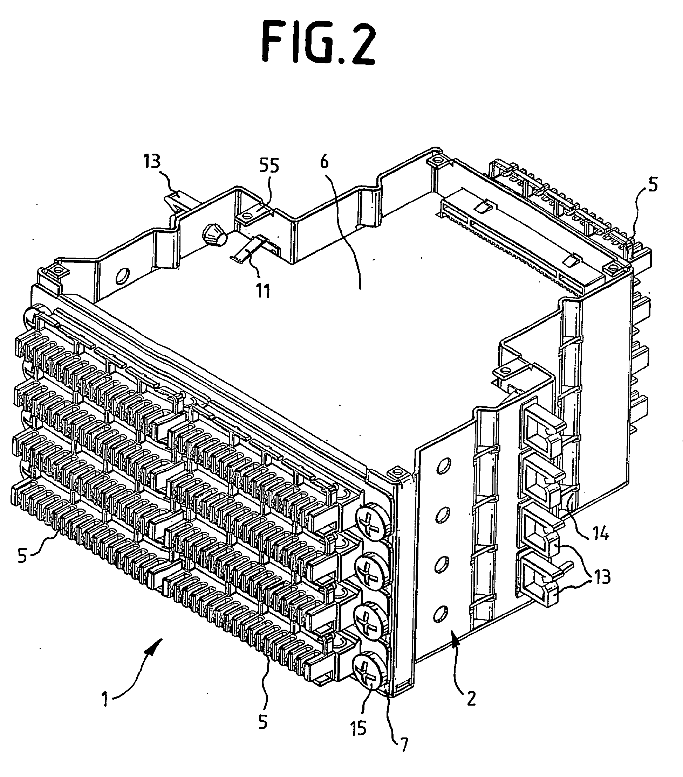

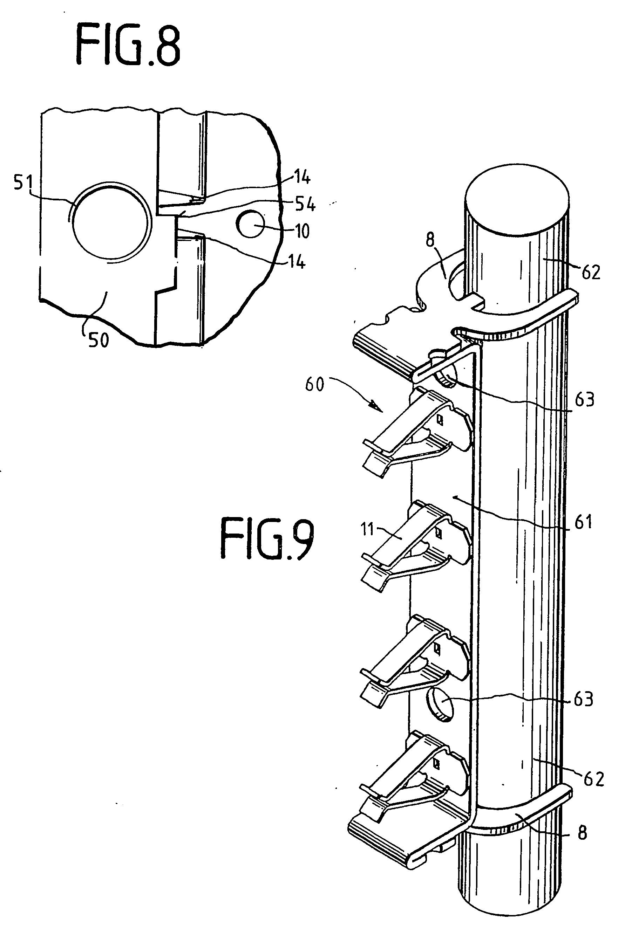

In der Fig. 1 ist ein Verteileranschlussmodul 1 dargestellt, umfassend ein metallisches Gehäuse 2 mit einem Deckel 3. An der Rückseite 4 des Gehäuses 2 sind übereinander vier Anschlussleisten 5 angeordnet, wobei jede Anschlussleiste 5 als 8DA-(Doppel-Ader)-Anschlussleiste ausgebildet ist. Die Anschlussleisten 5 sind mit Schneid-Klemm-Kontakten bestückt, die die Ausgangskontakte des Verteileranschlussmoduls 1 bilden. An der gegenüberliegenden Stirnseite sind vier Reihen mit jeweils zwei Anschlussleisten 5 angeordnet, die die Eingangskontakte des Verteileranschlussmoduls 1 bilden. Dabei sei angemerkt, dass die Bezeichnungen Eingangs- und Ausgangskontakte nur zur Definition dienen, da der Signalfluss in beide Richtungen gehen kann. Im Inneren des Verteileranschlussmoduls 1 ist ein Hohlraum, in dem Leiterplatten 6 angeordnet sind, wobei jeweils mindestens eine Leiterplatte 6 zwischen einer Anschlussleiste 5 der Rückseite und den zwei zugeordneten Anschlussleisten 5 der Vorderseite angeordnet ist, was in Fig. 2 erkennbar ist. Die jeweils zu einer Reihe zugehörigen Anschlussleisten 5 der Vorderseite sind jeweils über ein Frontteil 7 mit dem Gehäuse 2 verbunden, was später noch näher erläutert wird. Der Deckel 3 ist mit zwei Profil-Gabeln 8 ausgebildet, mittels derer das Verteileranschlussmodul 1 auf nicht dargestellte Profilstangen aufrastbar ist. Ebenso sind an einem nicht dargestellten Bodenteil zwei derartige Profil-Gabeln angeordnet. Um eine ausreichende Festigkeit zu erreichen, sind der Deckel 3 und das Bodenteil aus einem federnden Stahlblech ausgebildet, wohingegen das übrige Gehäuse 2 aus einem einfachen nicht rostenden Stahl gebildet sein kann. Der Deckel 3 und das Bodenteil sind mit dem Gehäuse 2 über Schrauben 9 verschraubt, wobei jeweils mindestens eine Schraube 9 im Bereich der Profil-Gabeln 8 angeordnet ist. Des Weiteren ist das Gehäuse 2 mit Öffnungen 10 ausgebildet, über die Federkontakte 11 an dem Gehäuse befestigt werden können. Die Federkontakte 11 bestehen vorzugsweise aus zwei zueinander gebogenen Blattfedern, was beispielsweise in Fig. 9 dargestellt ist. Die Blattfedern sind im vorderen Bereich von einander weggebogen, so dass sich ein Öffnungsbereich ergibt, der das Aufschieben der Leiterplatte 6 erleichtert. An den Öffnungsbereichen schließt sich dann ein Kontaktbereich an, wo die beiden Blattfedern zueinander gebogen sind.

Über die Federkontakte 11 kann dann eine Erdverbindung von der Leiterplatte 6 über die Federkontakte 11 zum Gehäuse 2 nach Masse realisiert werden. Dies ist insbesondere von Interesse, wenn auf der Leiterplatte 6 Schutzelemente wie Überspannungsableiter angeordnet sind. Die Federkontakte 11 kontaktieren dabei vorzugsweise die Leiterplatte 6 von der Ober- und Unterseite, wobei prinzipiell eine einseitige Kontaktierung ausreichend ist. Die Federkontakte 11 können dabei auf beiden Seiten des Gehäuses 2 als auch einseitig angeordnet sein. Dies hängt vom Leiterplattenlayout und den nach Masse abzuleitenden Stromstärken ab. Des Weiteren umfasst das Gehäuse 2 Aufnahmen für Kabelführungen 13 und Schlitzführungen 14 für die Leiterplatten 6.

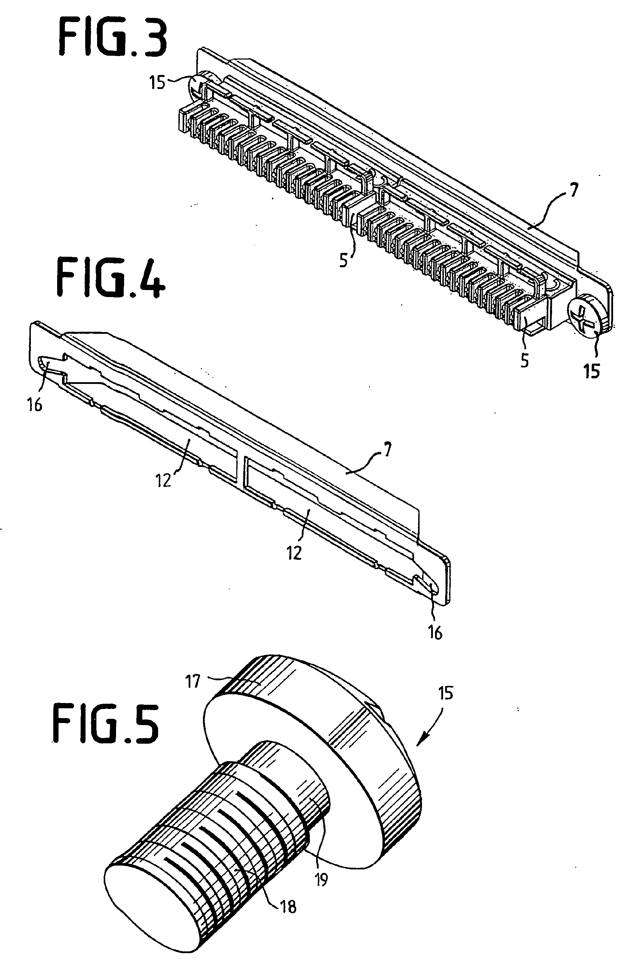

In der Fig. 3 ist ein Frontteil 7 mit zwei eingesetzten Anschlussleisten 5 sowie zwei Schrauben 15 dargestellt. Wie insbesondere in Fig. 4 zu erkennen ist, weist das Frontteil 7 Öffnungen 12 auf, in die die Anschlussleisten 5 eingesteckt und verrastet werden können. An diese Öffnungen 12 schließt sich jeweils seitlich ein schlitzförmiger Bereich 16 an. Die Schrauben 15 sind zwischen Schraubenkopf 17 und dem Gewindeteil 18 mit einer Nut 19 ausgebildet, wobei der Durchmesser des Gewindeteils 18 größer als die Breite des schlitzförmigen Bereiches 16 ist und der Durchmesser im Bereich der Nut 19 kleiner als die Breite des schlitzförmigen Bereiches ist, was in Fig. 5 dargestellt ist. Somit kann die Schraube 15 in die Öffnung 12 für die Anschlussleisten 5 gesteckt und entlang der Nut 19 in den schlitzförmigen Bereich 16 geschoben werden. Werden anschießend die Anschlussleisten 5 eingesteckt und verrastet, so sind die beiden Schrauben 15 verliersicher zu dem Frontteil 7 fixiert, aber drehbar gelagert. Dies hat zur Folge, dass bei einer Drehung der Schraube 15 in einem Gegengewinde eine Bewegung der Schraube 15 zu einer Zwangsbewegung von Frontteil 7 und Anschlussleisten 5 führt. Wird also die Schraube 15 auf das Gegengewinde am Gehäuse aufgeschraubt, so bewegt sich die Anschlussleiste 5 auf die Leiterplatte 6 zu. Die Schneid-Klemm-Kontakte sind mit Gabelkontakten ausgebildet, die sich über die Leiterplatte 6 schieben und die Leiterplatte 6 kontaktieren.

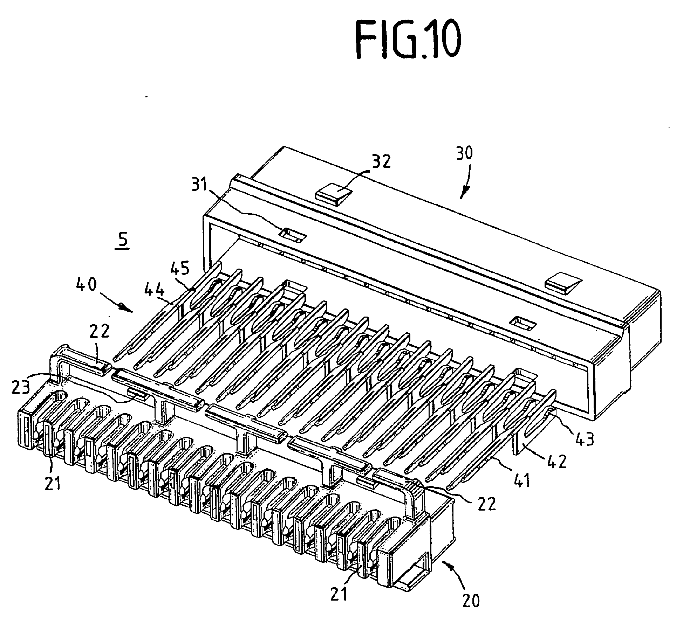

Bevor nun der Aufbau des Gehäuses näher beschrieben wird, soll zunächst anhand der Fig. 10 - 12 eine bevorzugte Ausführungsform der Anschlussleiste 5 näher erläutert werden. Mittels dieser Ausführungsform können die Anschlussleisten vorab beschaltet werden und nachträglich mit der Leiterplatte verbunden werden.

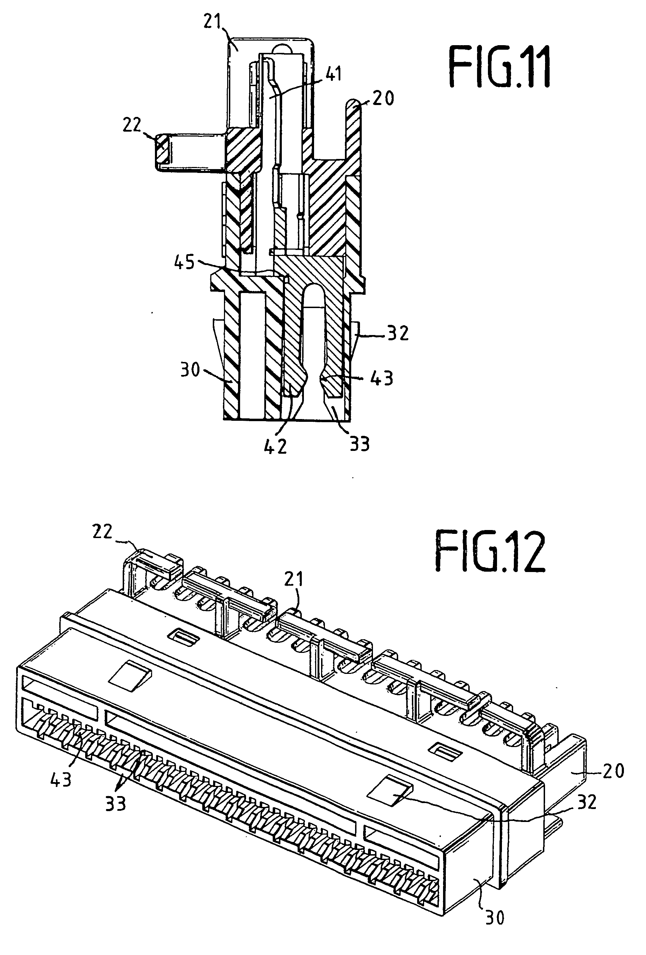

In der Fig. 10 ist perspektivisch die Anschlussleiste 5 dargestellt. Die Anschlussleiste 5 umfasst ein erstes Gehäuseteil 20, ein zweites Gehäuseteil 30 und eine Vielzahl von Kontaktelementen 40. Das erste Gehäuseteil 20 ist mit Klemmrippen 21, Drahtführungsösen 22 und Rastnasen 23 ausgebildet. Das zweite Gehäuseteil 30 ist mit Rastaufnahmen 31 und Rastnasen 32 ausgebildet. Des Weiteren bildet der zur Leiterplatte zugewandte Teil des zweiten Gehäuseteils 30 einen kammerartigen Bereich, an dessen Innenseiten oben und unten Rippen 33 angeordnet sind, was teilweise in Fig. 12 erkennbar ist, wobei die Rippen 33 im vorderen Bereich abgeschrägt sind. Durch die Abschrägung lässt sich der Steckverbinder leichter auf die Leiterplatte schieben. Die Kontaktelemente 40 weisen einen Schneid-Klemm-Kontakt 41 und einen Gabelkontakt 42 auf, wobei Schneid-Klemm-Kontakt 41 und Gabelkontakt 42 um ca. 45° zueinander verdreht sind. Der Gabelkontakt 42 weist jeweils zwei abgerundete, nach innen gewölbte Kontaktbereiche 43 auf-Die Schneid-Klemm-Kontakte 41 der Kontaktelemente 40 werden in Aufnahmen zwischen den Klemmrippen 21 gesteckt, wo diese mechanisch fixiert sind.

Anschießend wird das zweite Gehäuseteil 30 auf das erste Gehäuseteil 20 aufgerastet, wobei die Rastnasen 23 in die Rastaufnahmen 31 eingreifen. Des Weiteren werden die Kontaktelemente 40 an den Unterkanten 44 und/oder Unterkante 45 der Schneid-Klemm-Kontakte 41 an nicht sichtbaren mechanischen Anschlägen im zweiten Gehäuseteil 30 mechanisch abgestützt.

Dieser zusammengesetzte Zustand ist in den Fig. 11 und 12 dargestellt. Dabei stellt Fig. 11 einen Querschnitt durch die Anschlussleiste dar, wobei die Schnittstelle zwischen zwei Klemmrippen liegt. Wie man insbesondere in Fig. 11 erkennen kann, liegt die Unterkante 45 auf einem Anschlag des zweiten Gehäuseteils 30 auf. Die Kontaktelemente 40 sind dabei mechanisch in der Anschlussleiste 5 verliersicher gehalten, so dass in diesem Zustand eine Ader an einen Schneid-Klemm-Kontakt 41 angeschaltet werden kann, ohne dass die Anschaltkräfte das Kontaktelement 40 herausdrücken können. Die mechanischen Anschaltkräfte werden dabei durch die mechanischen Anschläge im zweiten Gehäuseteil 30 aufgenommen. Die Rippen 33 sind von der Höhe so dimensioniert, dass die Kontaktbereiche 43 hervorstehen. Somit ist sichergestellt, dass ein ausreichender Kontaktdruck zwischen Kontaktbereich 43 und einem auf der Leiterplatte angeordneten Kontaktpad zustande kommt.

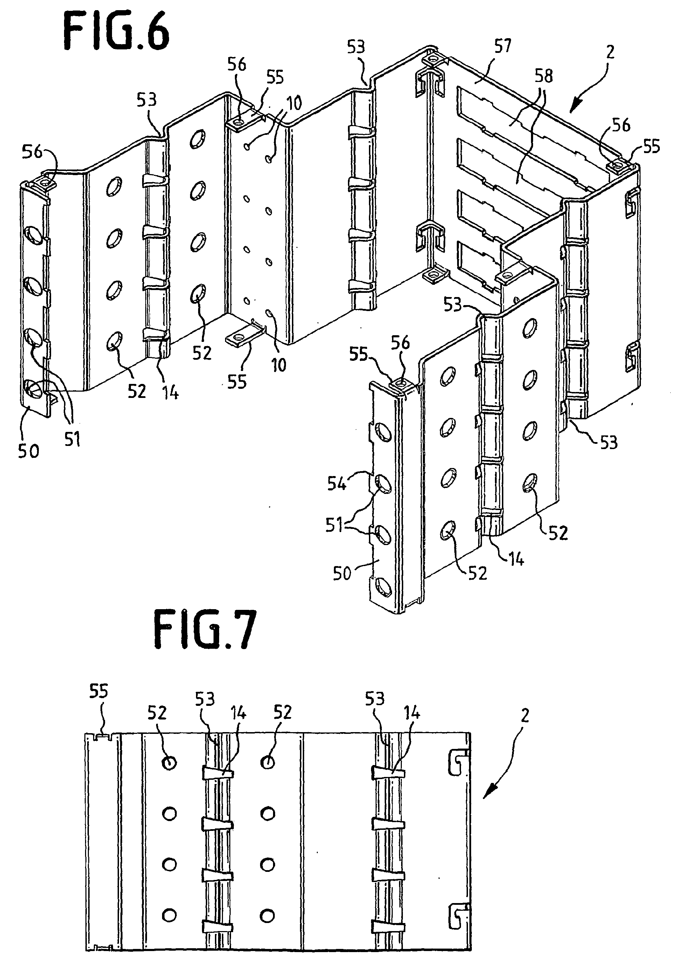

In der Fig. 6 ist das Gehäuse 2 perspektivisch ohne Deckel und Bodenteil dargestellt. Im vorderen Bereich ist das Gehäuse 2 mit zwei Stirnflächen 50 ausgebildet. In jeder Stirnfläche 50 sind vier Gewinde 51 eingearbeitet, in die die Schrauben 15 eingeschraubt werden können. In den Seitenwänden sind Öffnungen 52, in die die Kabelführungen 13 eingesteckt werden können. Des Weiteren kann über die Öffnungen 52 Verlustwärme abgeführt werden, die durch die Funktionselemente auf der Leiterplatte erzeugt wird. Des Weiteren sind die Öffnungen 10 für die Federkontakte zu sehen. Die Seitenwände sind jeweils mit zwei Einbuchtungen 53 ausgebildet, in die die Schlitzführungen 14 eingearbeitet sind, wobei deren genauer Verlauf besser aus Fig. 7 ersichtlich ist. Dabei ist zu erkennen, dass die obere Kante des Führungsschlitzes 14 schräg nach unten verläuft, um dann in einen horizontalen Bereich überzugehen. Dadurch kann eine Leiterplatte von der Frontseite von schräg oben geführt werden, bis diese hinter den Anschlag 54 fällt. Der Anschlag 54 ist in Fig. 8 vergrößert dargestellt. Der Anschlag 54 ragt dabei etwas über die gedachte Mittellinie des Gewindes 51. Im eingeschobenen Zustand liegt dann die Leiterplatte auf der unteren Kante des Führungsschlitzes 14 auf, so dass deren Stirnseite unterhalb des Anschlags 54 liegt. Im mittleren Bereich ist das Gehäuse mit nach innen gerichteten Stegen 55 ausgebildet, die Öffnungen 56 mit Gewinde umfassen, über die Deckel und Bodenteil an das Gehäuse 2 geschraubt werden. Die Rückwand 57 ist mit Öffnungen 58 ausgebildet, die ähnlich den Öffnungen 12 des Frontteils 7 sind. In diese Öffnungen 12 können dann die Anschlussleisten 5 eingeschoben und verrastet werden.

In der Fig. 9 ist eine mögliche Ausführungsform eines Blechteils 60 dargestellt, mittels dessen Profil-Gabeln 8 und Federkontakte 11 in einem gemeinsamen Bauteil realisiert werden können. Die Profil-Gabeln 8 sind dabei im hinteren Bereich U-förmig gebogen und gehen dann in einen Steg 61 über, von dem die Federkontakte 11 abgehen. Dieser U-förmige Bereich kann dann die Biegekräfte aufnehmen, die beim Aufrasten auf die Profilstangen 62 auftreten, ohne die Federkontakte 11 zu verbiegen. Das Blechteil 60 kann dann über die Öffnungen 63 in dem Steg 61 mit dem Gehäuse verschraubt werden. Bei dieser Ausführungsform müssen dann Deckel und Bodenteil nicht mehr aus einem federnden Material bestehen, sondern können wie das restliche Gehäuse aus einfachem nicht rostendem Stahl ausgebildet sein. Dabei ist es weiter möglich, Deckel, Bodenteil und das restlichte Gehäuse einstückig auszubilden.

### Bezugszeichenliste

- 1): Verteileranschlussmodul
- 2): Gehäuse
- 3): Deckel
- 4): Rückseite
- 5): Anschlussleiste
- 6): Leiterplatte
- 7): Frontteil
- 8): Profil-Gabeln
- 9): Schrauben
- 10): Öffnung
- 11): Federkontakt
- 12): Öffnungen
- 13): Kabelführung
- 14): Schlitzführung
- 15): Schraube
- 16): schlitzförmiger Bereich
- 17): Schraubenkopf
- 18): Gewindeteil
- 19): Nut
- 20): erstes Gehäuseteil
- 21): Klemmrippe
- 22): Drahtführungsösen
- 23): Rastnasen
- 30): zweites Gehäuseteil
- 31): Rastaufnahmen
- 32): Rastnasen
- 33): Rippen
- 40): Kontaktelement
- 41): Schneid-Klemm-Kontakt
- 42): Gabelkontakt
- 43): Kontaktbereich
- 44): Unterkante
- 45): Unterkante
- 50): Stirnfläche
- 51): Gewinde
- 52): Öffnung
- 53): Einbuchtung
- 54): Anschlag
- 55): Steg
- 56): Öffnung
- 57): Rückwand
- 58): Öffnung
- 60): Blechteil
- 61): Steg
- 62): Profilstange
- 63): Öffnung

## Patentansprüche

1. Verteileranschlussmodul (1) für die Telekommunikations- und Datentechnik, umfassend ein Gehäuse (2), in dem von außen zugänglich Eingangs- und Ausgangskontakte zum Anschließen von Leitungen und Adern angeordnet sind, wobei das Gehäuse (2) mit einem Hohlraum ausgebildet ist, in dem mindestens eine Leiterplatte (6) angeordnet ist, wobei die Eingangskontakte als mindestens eine Anschlussleiste (5) mit Schneid-Klemm-Kontakten (41) ausgebildet ist, wobei die Eingangs- und Ausgangskontakte lösbar mit der Leiterplatte (6) verbunden sind, wobei die die Eingangskontakte tragende Anschlussleiste (5) über ein Frontteil (7) mit dem Gehäuse (2) lösbar verbindbar ist, wobei die Schneid-Klemm-Kontakte (41) über Gabelkontakte (42) mit der Leiterplatte (6) verbunden sind und die Verbindung zwischen Frontteil (7) und Gehäuse (2) derart ausgebildet ist, dass beim Lösen der Verbindung die mit dem Frontteil (7) verbundene Anschlussleiste (5) mit den Gabelkontakten (42) von der Leiterplatte (6) wegbewegt wird,
**dadurch gekennzeichnet, dass**
die Eingangs- und Ausgangskontakte an den gegenüberliegenden Stirnseiten des Gehäuses angeordnet sind und das Gehäuse (2) mit einem Anschlag (54) ausgebildet ist, wobei die Leiterplatte (6) im eingesetzten Zustand mit ihrer den Eingangskontakten zugeordneten Stirnseite hinter dem Anschlag (54) liegt.

2. Verteileranschlussmodul nach Anspruch 1, **dadurch gekennzeichnet, dass** die Verbindung zwischen Frontteil (7) und Gehäuse (2) mindestens eine dem Frontteil (7) zugeordnete Schraube (15) und ein dem Gehäuse (2) zugeordnetes Gewinde (51) umfasst, wobei die Schraube (15) zum Frontteil (7) fixiert ist.

3. Verteileranschlussmodul nach Anspruch 2, **dadurch gekennzeichnet, dass** die Schraube (15) über eine Nut (19) zwischen Schraubenkopf (17) und Gewinde (18) zu dem Frontteil (7) fixiert.

4. Verteileranschlussmodul nach Anspruch 2 oder 3, **dadurch gekennzeichnet, dass** die Schraube (15) verliersicher mit dem Frontteil (7) verbunden ist.

5. Verteileranschlussmodul nach einem der vorangegangenen Ansprüche, **dadurch gekennzeichnet, dass** Seitenwände des Gehäuses Führungsschlitze (14) zum Abstützen der Leiterplatte (6) aufweisen, wobei eine Kante des Führungsschlitzes (14) schräg ausgebildet ist.

6. Verteileranschlussmodul nach einem der vorangegangenen Ansprüche, **dadurch gekennzeichnet, dass** das Gehäuse (2) aus Metall besteht.

7. Verteileranschlussmodul nach einem der vorangegangenen Ansprüche, **dadurch gekennzeichnet, dass** ein Bodenteil und ein Deckel (3) des Gehäuses (2) als separate Teile ausgebildet sind, die mit den Seitenwänden verbindbar sind.

8. Verteileranschlussmodul nach Anspruch 7, **dadurch gekennzeichnet, dass** der Deckel (3) und/oder das Bodenteil aus einem Federstahlblech ausgebildet sind, wobei an diesem Profil-Gabeln (8) angeordnet sind, mittels derer das Verteileranschlussmodul (1) auf Profilstangen (62) aufrastbar ist.

9. Verteileranschlussmodul nach Anspruch 8, **dadurch gekennzeichnet, dass** der Deckel (3) und/oder das Bodenteil im Bereich der Profil-Gabeln (8) mit den Seitenwänden verschraubt sind.

10. Verteileranschlussmodul nach einem der Ansprüche 6 bis 9, **dadurch gekennzeichnet, dass** am Gehäuse (2) Federkontakte (11) angeordnet sind, die mit der Leiterplatte (6) verbunden sind und einen Erdkontakt herstellen.

11. Verteileranschlussmodul nach einem der Ansprüche 8 bis 10, **dadurch gekennzeichnet, dass** die unteren und oberen Profil-Gabeln (8) aus einem Blechteil (60) geformt sind.

12. Verteileranschlussmodul nach Anspruch 11, **dadurch gekennzeichnet, dass** das Blechteil (60) mit dem Gehäuse (2) verschraubt ist.

13. Verteileranschlussmodul nach Anspruch 12, **dadurch gekennzeichnet, dass** die Federkontakte (11) mit dem Blechteil (60) verbunden sind.

14. Verteileranschlussmodul nach einem der vorangegangenen Ansprüche, **dadurch gekennzeichnet, dass** eine Gehäuserückwand (57) lösbar mit dem Gehäuse (2) verbunden ist.

15. Verteileranschlussmodul nach einem der Ansprüche 1 bis 13, **dadurch gekennzeichnet, dass** eine gehäuser rückwand (57) mit seitlichen Schlitzen ausgebildet ist, in die die Anschlussleisten (5) seitlich einschiebbar und verrastbar sind.

16. Verteileranschlussmodul nach einem der vorangegangenen Ansprüche, **dadurch gekennzeichnet, dass** in Seitenwände des Gehäuses (2) Kabelführungen (13) steckbar sind.

17. Verteileranschlussmodul nach einem der vorangegangenen Ansprüche, **dadurch gekennzeichnet, dass** jedem Frontteil (7) zwei Anschlussleisten (5) zugeordnet sind und an der gegenüberliegenden Stirnseite eine Anschlussleiste (5) oder ein Steckverbinder angeordnet ist.

18. Verteileranschlussmodul nach einem der vorangegangenen Ansprüche, **dadurch gekennzeichnet, dass** die Kontaktelemente (40) der Anschlussleisten (5) derart mechanisch in den Anschlussleisten (5) abgestützt sind, dass die Anschlussleisten (5) vorab mit Adern außerhalb des Verteileranschlussmodule beschaltbar sind.

## Claims

1. Distribution board connection module (1) for telecommunications and data technology, comprising a housing (2) in which externally accessible input and output contacts for connection of lines and conductors are arranged, with the housing (2) having a cavity in which at least one printed circuit board (6) is arranged, with the input contacts being in the form of at least one connecting strip (5) with insulation-displacement terminal contacts (41), with the input and output contacts being detachably connected to the printed circuit board (6), with the connecting strip (5) to which the input contacts are fitted being detachably connected via a front part (7) to the housing (2), with the insulation-displacement terminal contacts (41) being connected to the printed circuit board (6) via fork contacts (42), and with the connection between the front part (7) and the housing (2) being designed such that, when the connection is detached, the connecting strip (5) which is connected to the front part (7) is moved together with the fork contacts (42) away from the printed circuit board (6), **characterized in that** the input and output contacts are arranged on the opposite end faces of the housing and the housing (2) has a stop (54), with the printed circuit board (6) resting with its end face, which is associated with the input contacts, behind the stop (54) in the inserted state.

2. Distribution board connection module according to Claim 1, **characterized in that** the connection between the front part (7) and the housing (2) has at least one screw (15) which is associated with the front part (7) and one thread (51) which is associated with the housing (2), with the screw (15) being fixed to the front part (7).

3. Distribution board connection module according to Claim 2, **characterized in that** the screw (15) is fixed to the front part (7) via a groove (19) between the screw head (17) and the thread (18).

4. Distribution board connection module according to Claim 2 or 3, **characterized in that** the screw (15) is connected to the front part (7) such that it is held captive.

5. Distribution board connection module according to one of the preceding claims, **characterized in that** side walls of the housing have guide slots (14) for supporting the printed circuit board (6), with one edge of the guide slot (14) being formed obliquely.

6. Distribution board connection module according to one of the preceding claims, **characterized in that** the housing (2) is composed of metal.

7. Distribution board connection module according to one of the preceding claims, **characterized in that** a base part and a cover (3) of the housing (2) are separated parts which can be connected to the side walls.

8. Distribution board connection module according to Claim 7, **characterized in that** the cover (3) and/or the base part are/is formed from a spring steel sheet, with profiled forks (8) being arranged on this spring steel sheet, by means of which the distribution board connection module (1) can be latched onto profiled rods (62).

9. Distribution board connection module according to Claim 8, **characterized in that** the cover (3) and/or the base part are/is screwed to the side walls in the area of the profiled forks (8).

10. Distribution board connection module according to one of Claims 6 to 9, **characterized in that** spring contacts (11) are arranged on the housing (2), are connected to the printed circuit board (6), and make an earth contact.

11. Distribution board connection module according to one of Claims 8 to 10, **characterized in that** the lower and upper profiled forks (8) are formed from a sheet-metal part (60).

12. Distribution board connection module according to Claim 11, **characterized in that** the sheet-metal part (60) is screwed to the housing (2).

13. Distribution board connection module according to Claim 12, **characterized in that** the spring contacts (11) are connected to the sheet-metal part (60).

14. Distribution board connection module according to one of the preceding claims, **characterized in that** a housing rear wall (57) is detachably connected to the housing (2).

15. Distribution board connection module according to one of Claims 1 to 13, **characterized in that** a housing rear wall (57) has side slots into which the connecting strips (5) can be inserted and latched from the side.

16. Distribution board connection module according to one of the preceding claims, **characterized in that** cable guides (13) can be plugged into side walls of the housing (2).

17. Distribution board connection module according to one of the preceding claims, **characterized in that** each front part (7) has two associated connecting strips (5), and one connecting strip (5) or one plug connector is arranged on the opposite end face.

18. Distribution board connection module according to one of the preceding claims, **characterized in that** the contact elements (40) of the connecting strips (5) are mechanically supported in the connecting strips (5) such that the connecting strips (5) can be connected in advance to conductors outside the distribution board connection module.

## Revendications

1. Module de raccordement de distribution (1) pour la technique des télécommunications et de l'informatique, comprenant un boîtier (2) dans lequel sont disposés des contacts d'entrée et de sortie accessibles de l'extérieur, pour le raccordement de lignes et de brins, dans lequel le boîtier (2) comporte un espace creux dans lequel est disposée au moins une plaquette de circuits imprimés (6), dans lequel les contacts d'entrée sont formés par au moins une réglette de raccordement (5) avec des contacts à borne guillotine (41), dans lequel les contacts d'entrée et de sortie sont assemblés de manière amovible à la plaquette de circuits imprimés (6), dans lequel la réglette de raccordement (5) portant les contacts d'entrée peut être assemblée de manière amovible au boîtier (2) par une partie avant (7), dans lequel les contacts à borne guillotine (41) sont raccordés à la plaquette de circuits imprimés (6) par des contacts lyres (42) et l'assemblage entre la partie avant (7) et le boîtier (2) est réalisé de telle manière que, lors de la séparation de l'assemblage, la réglette de raccordement (5) reliée à la partie avant (7) soit écartée de la plaquette de circuits imprimés (6) avec les contacts lyres (42), **caractérisé en ce que** les contacts d'entrée et de sortie sont disposés sur les faces frontales opposées du boîtier et le boîtier (2) est muni d'une butée (54), la plaquette de circuits imprimés (6) étant située, à l'état monté, avec sa face frontale associée aux contacts d'entrée, derrière la butée (54).

2. Module de raccordement de distribution selon la revendication 1, **caractérisé en ce que** l'assemblage entre la partie avant (7) et le boîtier (2) comprend au moins une vis (15) associée à la partie avant (7) et un filet (51) associé au boîtier (2), la vis (15) étant fixée à la partie avant (7).

3. Module de raccordement de distribution selon la revendication 2, **caractérisé en ce que** la vis (15) est fixée à la partie avant (7) par une rainure (19) entre la tête de vis (17) et un filet (18).

4. Module de raccordement de distribution selon la revendication 2 ou 3, **caractérisé en ce que** la vis (15) est reliée à la partie avant (7) de manière imperdable.

5. Module de raccordement de distribution selon l'une quelconque des revendications précédentes, **caractérisé en ce que** des parois latérales du boîtier présentent des fentes de guidage (14) pour supporter la plaquette de circuits imprimés (6), une arête de la fente de guidage (14) étant oblique.

6. Module de raccordement de distribution selon l'une quelconque des revendications précédentes, **caractérisé en ce que** le boîtier (2) est constitué de métal.

7. Module de raccordement de distribution selon l'une quelconque des revendications précédentes, **caractérisé en ce qu'**une pièce de fond et un couvercle (3) du boîtier (2) sont des pièces séparées, qui peuvent être assemblées aux parois latérales.

8. Module de raccordement de distribution selon la revendication 7, **caractérisé en ce que** le couvercle (3) et/ou la pièce de fond sont fabriqués en une tôle d'acier à ressort, celle-ci présentant des lyres profilées (8) au moyen desquelles le module de raccordement de distribution (1) peut être emboîté sur des barres profilées (62).

9. Module de raccordement de distribution selon la revendication 8, **caractérisé en ce que** le couvercle (3) et/ou la pièce de fond sont vissés aux parois latérales dans la région des lyres profilées (8).

10. Module de raccordement de distribution selon l'une quelconque des revendications 6 à 9, **caractérisé en ce que** le boîtier (2) comporte des contacts à ressort (11), qui sont raccordés à la plaquette de circuits imprimés (6) et forment un contact de terre.

11. Module de raccordement de distribution selon l'une quelconque des revendications 8 à 10, **caractérisé en ce que** les lyres profilées inférieures et supérieures (8) sont formées à partir d'une pièce de tôle (60).

12. Module de raccordement de distribution selon la revendication 11, **caractérisé en ce que** la pièce de tôle (60) est vissée sur le boîtier (2).

13. Module de raccordement de distribution selon la revendication 12, **caractérisé en ce que** les contacts à ressort (11) sont assemblés à la pièce de tôle (60).

14. Module de raccordement de distribution selon l'une quelconque des revendications précédentes, **caractérisé en ce qu'**une paroi arrière de boîtier (57) est assemblée au boîtier (2) de manière amovible.

15. Module de raccordement de distribution selon l'une quelconque des revendications 1 à 13, **caractérisé en ce qu'**une paroi arrière de boîtier (57) présente des fentes latérales, dans lesquelles les réglettes de raccordement (5) peuvent être insérées latéralement et verrouillées.

16. Module de raccordement de distribution selon l'une quelconque des revendications précédentes, **caractérisé en ce que** des chemins de câbles (13) peuvent être enfichés dans des parois latérales du boîtier (2).

17. Module de raccordement de distribution selon l'une quelconque des revendications précédentes, **caractérisé en ce que** deux réglettes de raccordement (5) sont associées à chaque partie avant (7) et une réglette de raccordement (5) ou un connecteur est disposé(e) sur la face frontale opposée.

18. Module de raccordement de distribution selon l'une quelconque des revendications précédentes, **caractérisé en ce que** les éléments de contact (40) des réglettes de raccordement (5) sont soutenus mécaniquement dans les réglettes de raccordement (5) de telle manière que les réglettes de raccordement (5) puissent être préalablement connectées à des brins à l'extérieur du module de raccordement de distribution.
